# EUROPEAN PATENT SPECIFICATION

(11) **EP 3 451 710 B1**
(45) Date of publication and mention of the grant of the patent: **26.02.2020**
(21) Application number: 18192227.9
(22) Date of filing: 22.05.2014
(51) Int. Cl.: H04W 4/00, H04W 36/00, H04W 76/12

(54) **EVOLVED PACKET CORE AND METHOD, PERFORMED BY AN EVOLVED PACKET CORE, FOR SERVING A USER EQUIPMENT, UE**
EVOLVED PACKET CORE UND VERFAHREN, DURCH EINEN EVOLVED PACKET CORE, ZUM WARTEN EINES BENUTZERGERÄTS, UE
NOYAU DE PAQUET ÉVOLU ET PROCÉDÉ, EFFECTUÉ PAR UN NOYAU DE PAQUET ÉVOLUÉ, POUR SERVIR UN ÉQUIPEMENT UTILISATEUR, UE

(30) Priority: 22.05.2013 US 201361826362 P; 21.05.2014 US 201414284107
(43) Date of publication of application: 06.03.2019
(62) Divisional of application: 14801384.0
(73) Proprietor: HUAWEI TECHNOLOGIES CO., LTD., Guangdong 518129 (CN)
(72) Inventor: KAIPPALLIMALIL, John, Richardson, TX 75082 (US); CHAN, Hinghung Anthony, Plano, TX 75093 (US); XIANG, Zhixian, Plano, TX 75024 (US); SABOORIAN, Khosrow Tony, Shenzhen, Guangdong 518129 (CN); MANNING, Serge, Plano, TX 75025 (US)
(74) Representative: Gill Jennings & Every LLP

(56) References cited:
- WO-A1-2012/050841
- WO-A1-2012/156171
- WO-A1-2013/041574
- WO-A1-2013/060488
- WO-A2-2009/034071
- US-A1- 2011 286 430

## Description

### TECHNICAL FIELD

The present invention relates generally to an evolved packet core, EPC.

### BACKGROUND

3GPP LTE and Wi-Fi use centralized architectures where user sessions are managed in highly centralized data centers or central offices. Due to the proliferation of highly functional user equipment (UE) that allow users to multi-task, for example, surf the internet, instant message and stream videos at the same time, the handling of user sessions in the data centers or central office can approach the performance limits of the data centers or central office.

In addition, with the increased deployment of small cells, het-net, machine to machine (M2M), and networks of devices, where thousands or millions of devices are attached, there are a large number of user sessions, some of which are more local (i.e., originate and terminate in nearby locations), while others are more distant. Each of these devices may be mobile. An evolved packet core (EPC) network anchors the Internet protocol (IP) session centrally and thus is able to maintain the same IP session while a device transitions between layer 2 anchor points.

WO 2009/034071 A2 relates to service continuation for a local breakout service in case of handover. WO 2013/060488 A1 relates to per - host locator to enable mobility gateway relocation. WO 2012/050841 A1 relates to method and apparatus for releasing connection with local GW when UE moves out of the residential/enterprise network coverage. WO 2012/156171 A1 relates to distributed gateway relocation with central internet protocol address allocation. US 20110286430 A1 relates to communication system and communication controlling method. WO 2013/041574 A1 relates to deferred address allocation of ipv4 or ipv6 in case of interworking between non-3gpp access and evolved packet core.

### SUMMARY OF THE INVENTION

The invention is set out in the appended set of claims.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 is a block diagram of one embodiment of a communication system;
Figure 2 is a block diagram of one embodiment of an EPC;
Figure 3 is a block diagram illustrating a UE transitioning from being served by one distributed EPC to being served by another distributed EPC;
Figure 4 is a flow diagram of one embodiment of a method of managing a user session and an IP session for a connection between a UE and a network; and
Figure 5 is a block diagram of a processing system

### DETAILED DESCRIPTION OF ILLUSTRATIVE EMBODIMENTS

The making and using of embodiments are discussed in detail below. It should be appreciated, however, that the present invention provides many applicable inventive concepts that may be embodied in a wide variety of specific contexts. The specific embodiments discussed are merely illustrative of specific ways to make and use the invention, and do not limit the scope of the invention.

The EPC is a network architecture that provides a functional framework for handling user data and user sessions for multiple users, i.e., UEs. The EPC connects an access network, such as an LTE access network, to one or more external networks. External networks can include the Internet, corporate networks, and the IP multimedia core network subsystem (IMS). The access network typically includes multiple radio nodes to which the various UEs connect to access the external networks or to communicate with other UEs on the access network.

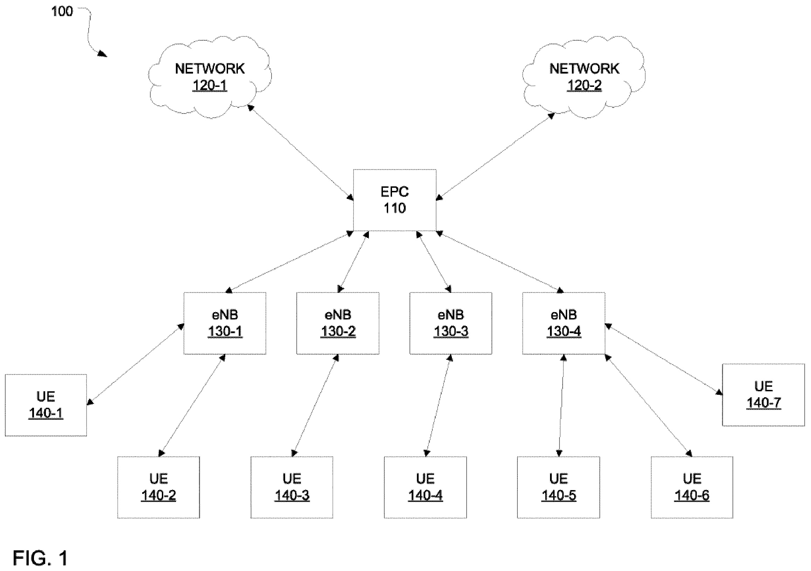

Figure 1 is a block diagram of one embodiment of a communication system 100. Communication system 100 includes an EPC 110 that connects an access network to external networks 120-1 and 120-2. The access network includes multiple radio nodes. In certain embodiments, a radio node is an enhanced node B (eNB). Communication system 100 includes eNBs 130-1 through 130-4. eNBs 130-1 through 130-4 provide radio access to mobile users, i.e., UEs 140-1 through 140-7. eNBs 130-1 through 130-4 provide access to external networks 120-1 and 120-2.

In alternative embodiments, communication system 100 can include any number of radio nodes and UEs. In other embodiments, EPC 110 can connect the access network to any number of external networks. In certain embodiments, multiple EPCs can connect to each other through external networks 120-1 and 120-2.

A typical EPC includes several functional modules, the functions of which are generally categorized as in a user plane or in a control plane. The user plane handles user data, i.e., payload data. The control plane coordinates connections and administers policies. Basic elements of the user plane include serving gateways (SGWs) and a packet data network (PDN) gateway (PGW). Basic elements of the control plane include a home subscriber server (HSS), a mobility management entity (MME), a policy and charging rules function (PCRF), and a subscriber provisioning repository (SPR). For further information regarding the EPC network architecture, see 3GPP Technical Specification 23.002, March 10, 2014.

The HSS is a database that contains user-related and subscriber-related information. The HSS also provides support functions in mobility management, call and session setup, user authentication, and access authorization. The MME handles signaling and logic related to selecting appropriate eNBs, SGWs, and PGWs, coordinating and setting up connections, and managing resources for various sessions. The MME also supports authentication and identification, among many other functions. The PCRF is a policy decision point for policy and charging control of service data flows. The PCRF also selects and provides applicable policy and charging decisions. In some cases, the PCRF provides dynamic quality of service (QoS) control policies. The SPR stores subscriber related information needed for subscription-based policies and charging control by the PCRF.

SGWs transport IP data traffic between UEs and external networks. The SGWs serve as the interface between radio nodes and the EPC and also serve as an anchor point for UE sessions and for layer 2 mobility among radio nodes. The SGWs are logically connected to the PGW. The PGW anchors IP sessions for the UEs and serves as an interface between external networks and the EPC. The PGW transports IP data traffic to and from the external networks, which are sometimes referred to as PDNs.

During a UE's transition from being served by a radio node coupled to one PGW to being served by another radio node coupled to another PGW, in a typical EPC, a first MME for the one PGW informs a second MME for the other PGW about context transfer during handover. The communication is initiated upon a request by the UE to the first MME to release its resources. It is realized herein that the UE can inform the second MME of the context transfer directly, and the second MME can inform the first MME.

A typical system hosts the SGW, PGW and servers such as MME, PCRF, etc., in a centralized data center or central office. Various networks, such as broadband, cable or dedicated fiber networks, backhaul IP traffic between the eNBs and the SGW. All the IP sessions for the corresponding user sessions are backhauled to the PGW in the central data center. From there the IP sessions are routed to respective destinations. When the UE sessions in a particular region served by the EPC increase, or reach a certain density, it is realized herein, the backhauled IP sessions will approach the capacity of the PGW.

It is realized herein that user sessions and IP sessions can be more efficiently handled by distributing certain EPC functionality while retaining centralization of other EPC functionality. Session handling functions, including those carried out by the MME, SGW, and PGW, can be distributed more locally with respect to access networks and their respective radio nodes. Distributed functionality can be implemented on dedicated servers or can be implemented virtually at the various distributed locations. It is realized herein that certain subscription related functionality, including those carried out by the HSS and SPR, can remain centralized, while others, including that carried out by the PCRF, can be distributed. The centralized components for policy and network selection can manage static, overall policy for the domain. The distributed components can manage policy and network selection at a user level, per IP data flow. It is also realized herein that policy and network selection can be partially or fully distributed. When partially distributed, a centralized policy and network selection function coordinates overall policy with subscriber information and dynamic network status. Otherwise, in fully distributed architectures, these functions are distributed to the various distributed to the various distributed EPCs. It is further realized herein that in a distributed EPC, IP data flows are not necessarily backhauled to a central data center; rather they are routed to the destination external network from the distributed EPC.

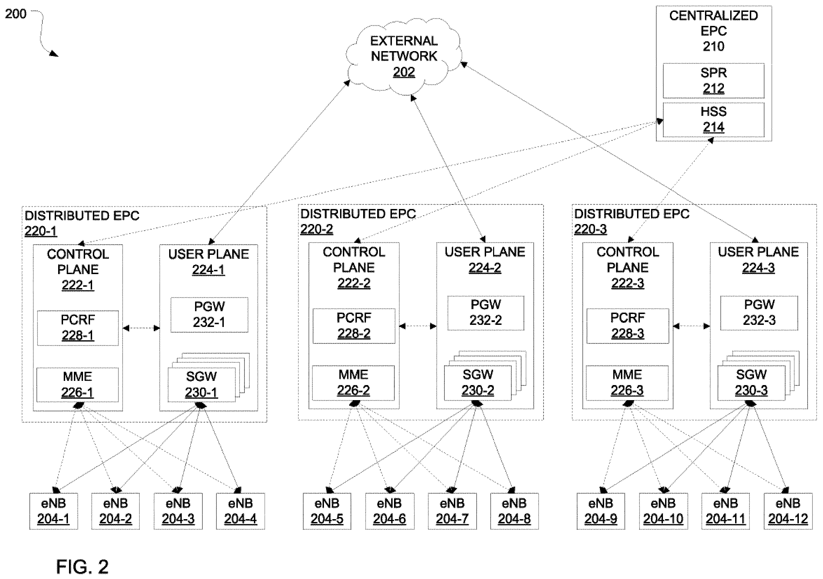

Figure 2 is a block diagram of one embodiment of an EPC 200. EPC 200 includes a centralized EPC 210 and distributed EPCs 220-1, 220-2, and 220-3. Centralized EPC 210 includes an HSS 214 and a SPR 212. Distributed EPCs 220-1, 220-2, and 220-3 connect eNBs 204-1 through 204-12 to an external network 202.

Each of distributed EPCs 220-1, 220-2, and 220-3 include respective control planes and user planes. For example, distributed EPC 220-1 includes a control plane 222-1 and a user plane 224-1. User plane 224-1 handles user data flowing from eNBs 204-1 through 204-4 to external network 202. User plane 224-1 includes a plurality of SGWs 230-1 that serve as an interface between EPC 200 and eNBs 204-1 through 204-4. SGWs 230-1 anchor user sessions for UEs being served by eNBs 204-1 through 204-4. SGWs 230-1 are logically connected to a PGW 232-1. PGW 232-1 serves as an interface between EPC 200 and external network 202. PGW 232-1 anchors IP sessions for UEs being served by eNBs 204-1 through 204-4. Control plane 222-1 includes PCRF 228-1 and MME 226-1. PCRF 228-1 serves as a policy decision point for PGW 232-1. MME 226-1 coordinates connections for UEs through eNBs 204-1 through 204-4, SGWs 230-1, and PGW 232-1. Certain control signals flow from control plane 220-1 up to centralized EPC 210.

PCRFs 228-1 through 228-3, MMEs 226-1 through 226-3, PGWs 232-1 through 232-3, and SGWs 230-1 through 230-3 can be implemented in one or more processors, one or more application specific integrated circuits (ASICs), one or more field-programmable gate arrays (FPGAs), dedicated logic circuitry, or any combination thereof, all collectively referred to as a processor. The respective functions for PCRFs 228-1 through 228-3 and MMEs 226-1 through 226-3 can be stored as instructions in non-transitory memory for execution by the processor.

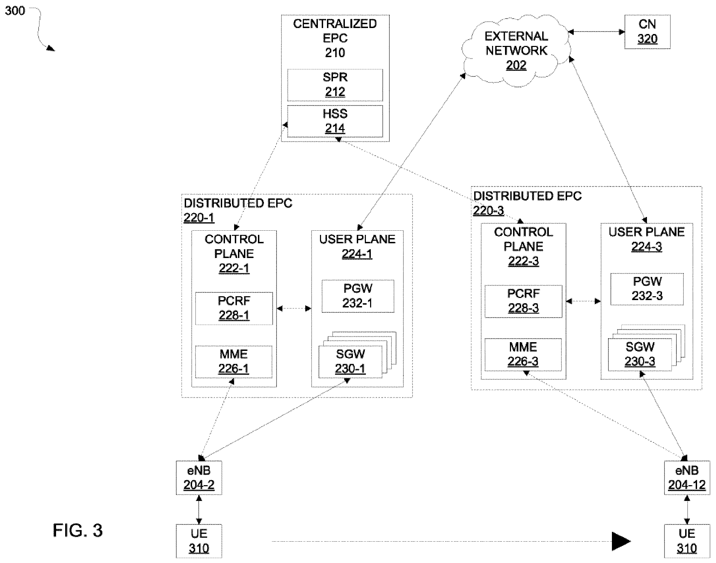

Figure 3 is a block diagram of an EPC 300 illustrating how a UE 310 transitions from being served by an eNB 204-2 to being served by an eNB 204-12. EPC 300 includes centralized EPC 210 and distributed EPCs 220-1 and 220-3 that connect external network 202 to UEs being served by eNBs 204-1 through 204-12, all from the embodiment of Figure 2. EPC 300 serves UE 310 by connecting it to a corresponding node (CN) 320 through external network 202.

Initially, UE 310 is served by distributed EPC 220-1 through eNB 204-2. UE 310 is authenticated by HSS 214 via control signaling from MME 226-1. Once authenticated, an IP data flow is established from UE 310, through eNB 204-2, SGW 230-1, PGW 232-1, and on through external network 202 to CN 320. A user session for UE 310 is anchored at SGW 230-1. An IP session is anchored at PGW 232-1.

When UE 310 changes location, it transitions from being served by eNB 204-2 to being served by eNB 204-12. UE 310 signals eNB 204-12, and ultimately MME 226-3 to request release of connectivity resources. MME 226-3 informs MME 226-1 of the request, and MME 226-1 instructs PGW 232-1 to release the connectivity resources and signals HSS 214 to notify it of the released connectivity resources. MME 226-1 also informs HSS 214 that IP resources for UE 310 are being held, which generally includes an IP address for UE 310. HSS 214 is configured to maintain multiple session bindings for UE 310.

UE 310 then initializes a connection with eNB 204-12 at its new location. eNB 204-12 relays the control signal to MME 226-3 to setup the connection with the held IP resources. MME 226-3 re-authenticates UE 310 with HSS 214. HSS 214 provides the held IP resources, including the address of PGW 232-1. MME 226-3 coordinates the connection with PGW 232-3 through SGW 230-3 and eNB 204-12. MME 226-3 also coordinates with PGW 232-3 to establish a tunnel from PGW 232-3 and PGW 232-1. The IP session remains anchored at PGW 232-1, while the user session transitions to SGW 230-3. User data from UE 310 is then routed from eNB 204-12, to SGW 230-3, to PGW 232-3, through the tunnel to PGW 232-1, and on to external network 202 and CN 320.

UE 310 can also establish new IP sessions directly through SGW 230-3 and PGW 232-3 to external network 202, all while maintaining the IP data flow through the tunnel to PGW 232-1 for the original IP session.

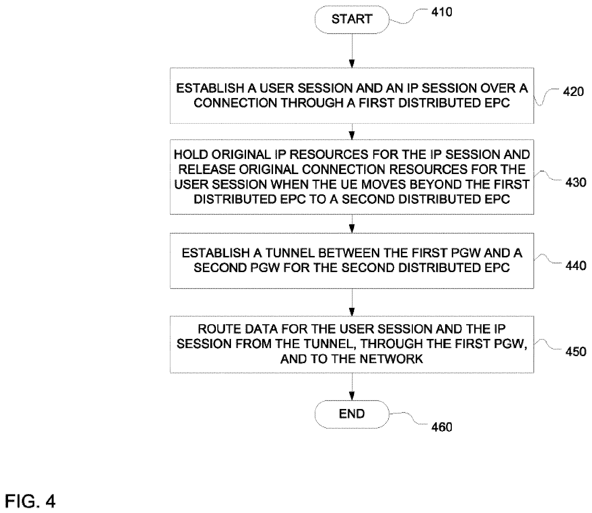

Figure 4 is a flow diagram for one embodiment of a method of managing a user session and an IP session for a connection between a UE and a network. The method begins at a start step 410. At a first connecting step 420, a user session and an IP session are established at a first distributed EPC. The IP session is anchored at a first PGW for the first distributed EPC. At a transition step 430, when the UE moves beyond the first distributed EPC to a second distributed EPC, the original connection resources for the user session are released. The original IP resources are held. The first distributed EPC notifies an HSS at a central EPC of the held IP resources and of the released connection resources. At a second connecting step 440, a tunnel is established between the first PGW and a second PGW for the second distributed EPC. The tunnel uses the original IP resources, retrieved from the HSS. The new connection uses new connection resources coordinated through the second distributed EPC. The tunnel is established by a coordination between a first MME at the first distributed EPC and a second MME at the second distributed EPC. At a routing step 450, user data is then routed from the UE, to the second PGW, through the tunnel to the first PGW, and to the network. The method then ends at an end step 460.

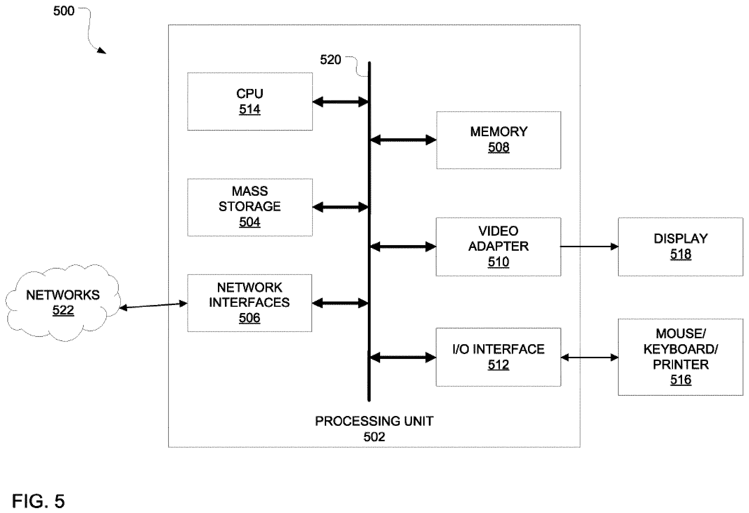

Figure 5 is a block diagram of a processing system 500 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system 500 may comprise a processing unit 502 equipped with one or more input/output devices, such as a speaker, microphone, mouse, touchscreen, keypad, keyboard, printer, display, and the like. The processing unit may include a central processing unit (CPU) 514, memory 508, a mass storage device 504, a video adapter 510, and an I/O interface 512 connected to a bus 520.

The bus 520 may be one or more of any type of several bus architectures including a memory bus or memory controller, a peripheral bus, video bus, or the like. The CPU 514 may comprise any type of electronic data processor. The memory 508 may comprise any type of system memory such as static random access memory (SRAM), dynamic random access memory (DRAM), synchronous DRAM (SDRAM), read-only memory (ROM), a combination thereof, or the like. In an embodiment, the memory 508 may include ROM for use at boot-up, and DRAM for program and data storage for use while executing programs.

The mass storage 504 may comprise any type of storage device configured to store data, programs, and other information and to make the data, programs, and other information accessible via the bus 520. The mass storage 504 may comprise, for example, one or more of a solid state drive, hard disk drive, a magnetic disk drive, an optical disk drive, or the like.

The video adapter 510 and the I/O interface 512 provide interfaces to couple external input and output devices to the processing unit 502. As illustrated, examples of input and output devices include a display 518 coupled to the video adapter 510 and a mouse/keyboard/printer 516 coupled to the I/O interface 512. Other devices may be coupled to the processing unit 502 and additional or fewer interface cards may be utilized. For example, a serial interface such as Universal Serial Bus (USB) (not shown) may be used to provide an interface for a printer.

The processing unit 502 also includes one or more network interfaces 506, which may comprise wired links, such as an Ethernet cable or the like, and/or wireless links to access nodes or different networks. The network interfaces 506 allow the processing unit 502 to communicate with remote units via the networks. For example, the network interfaces 506 may provide wireless communication via one or more transmitters/transmit antennas and one or more receivers/receive antennas. In an embodiment, the processing unit 502 is coupled to a local-area network 522 or a wide-area network for data processing and communications with remote devices, such as other processing units, the Internet, remote storage facilities, or the like.

## Claims

1. An evolved packet core, EPC, for serving a user equipment, UE, comprising:
a centralized EPC (210) having a home subscriber server, HSS (214), configured to store authentication information and to authenticate and identify the UE;
a first distributed EPC (220-1) having:
a first serving gateway, SGW (230-1), configured to be coupled to a first radio node (204-2) and configured to anchor a user session for the UE and to route user data to and from the UE through the first radio node,
a first packet data network gateway, PGW (232-1), configured to be coupled between the first SGW and a network and configured to anchor an internet protocol, IP, session for the UE and to route the user data between the first SGW and the network, and
a first mobility management entity, MME (226-1), configured to receive an authentication of the UE from the HSS and coordinate establishment of the user session and the IP session; and
a second distributed EPC (220-3) having:
a second SGW (230-3) configured to be coupled to a second radio node (204-12) and configured to route the user data to and from the second radio node,
a second PGW (232-3) configured to be coupled between the second SGW and the network and configured to route the user data between the second SGW and the network, and
a second MME (226-3);
wherein, when the UE transitions from being served by the first radio node to being served by the second radio node, the first MME is configured to:
instruct the first PGW to release connection resources for the user session and to hold IP resources for the IP session, and
inform the HSS of the release of the connection resources and of the hold of the IP resources; and
wherein, when the UE initiates connectivity with the second radio node, the second MME is configured to:
receive a re-authentication of the UE from the HSS, and
coordinate with the HSS and the first MME to establish a tunnel between the first PGW and the second PGW according to the IP resources and through which the user data can be routed from the UE to the second PGW, to the first PGW, and to the network.

2. The EPC of Claim 1, wherein the second MME is further configured to establish new IP sessions for the UE with the second PGW routed directly to the network.

3. The EPC of Claim 1 or 2, wherein the central EPC further comprises a subscriber provisioning repository configured to store subscriber information for the UE.

4. The EPC of any of Claims 1-3, wherein the first distributed EPC further comprises a policy and charging rules function coupled to the first MME and the first PGW and configured to provide dynamic quality of service, QoS, policies for the first PGW.

5. The EPC of any of Claims 1-4, wherein the second MME is further configured to receive an address for the first PGW when the UE initiates connectivity with the second radio node.

6. The EPC of any of Claims 1-5, wherein the second MME is further configured to:
receive a request from the UE to release the connection resources; and
forward the request to the first MME.

7. The EPC of any of Claims 1-6, wherein the first distributed EPC further comprises a server on which the first MME is implemented as a virtual function.

8. The EPC of any of Claims 1-7, wherein the HSS is further configured to store the IP resources for the UE in a location database.

9. The EPC of Claim any of Claims 1-8, wherein the first SGW, the first PGW, and the first MME are implemented as virtual functions on at least one processing system

10. A method, performed by an evolved packet core, EPC, comprising a centralised EPC, a first distributed EPC and a second distributed EPC, the method for serving a user equipment, UE, comprising:
storing, by a home subscriber server, HSS, in the centralized EPC, authentication information;
authenticating and identifying, by the HSS, the UE;
anchoring, by a first serving gateway, SGW in the first distributed EPC, a user session for the UE, wherein the first SGW is coupled to a first radio node;
routing, by the first SGW, user data to and from the UE through the first radio node;
anchoring, by a first packet data network gateway, PGW in the first distributed EPC, an internet protocol, IP, session for the UE, wherein the first PGW is coupled between the first SGW and a network;
routing , by the first PGW, the user data between the first SGW and the network;
receiving, by a first mobility management entity, MME, in the first distributed EPC ,an authentication of the UE from the HSS;
coordinating, by the first MME, establishment of the user session and the IP session;
routing, by a second SGW in the second distributed EPC , the user data to and from a second radio node, wherein the second SGW is coupled to the second radio node;
routing, by a second PGW in the second distributed EPC, the user data between the second SGW and the network, wherein the second PGW is coupled between the second SGW and the network;
when the UE transitions from being served by the first radio node to being served by the second radio node,
instructing, by the first MME, the first PGW to release connection resources for the user session and to hold IP resources for the IP session;
informing, by the first MME, the HSS of the release of the connection resources and of the hold of the IP resources; and
when the UE initiates connectivity with the second radio node,
receiving, by a second MME in the second distributed EPC, a re-authentication of the UE from the HSS;
coordinating, by the second MME, with the HSS and the first MME to establish a tunnel between the first PGW and the second PGW according to the IP resources and through which the user data can be routed from the UE to the second PGW, to the first PGW, and to the network.

11. The method of Claim 10, further comprising:
establishing, by the second MME, new IP sessions for the UE with the second PGW routed directly to the network.

12. The method of Claims 10 or 11, further comprising:
receiving, by the second MME, an address for the first PGW when the UE initiates connectivity with the second radio node.

13. The method of any Claims 10-12, further comprising:
receiving, by the second MME, a request from the UE to release the connection resources and forward the request to the first MME.

14. The method of any Claims 10-13, further comprising:
storing, by the HSS, the IP resources for the UE in a location database.

15. The method of any Claims 10-14, wherein the first SGW, the first PGW, and the first MME are implemented as virtual functions on at least one processing system.

## Patentansprüche

1. Entwickelter Paketkern, EPC, zum Warten einer Teilnehmereinrichtung, UE, umfassend:
einen zentralisierten EPC (210), aufweisend einen Heimteilnehmerserver, HSS (214), ausgelegt zum Speichern von Authentifizierungsinformation und zum Authentifizieren und Identifizieren der UE;
einen ersten verteilten EPC (220-1), aufweisend:
ein erstes bedienendes Gateway, SGW (230-1), ausgelegt zur Kopplung zwischen einem ersten Funkknoten (204-2) und ausgelegt zum Verankern einer Benutzersitzung für die UE und zum Leiten der Benutzerdaten zu und von der UE durch den ersten Funkknoten,
ein erstes Paketdatennetzwerk-Gateway, PGW (232-1), ausgelegt zur Kopplung zwischen dem ersten SGW und einem Netzwerk und ausgelegt zum Verankern einer Internetprotokoll(IP)-Sitzung für die UE und zum Leiten der Benutzerdaten zwischen dem ersten SGW und dem Netzwerk, und
eine erste Mobilitätsverwaltungsentität, MME (226-1), ausgelegt zum Empfangen einer Authentifizierung der UE von dem HSS und zum Koordinieren des Aufbaus der Benutzersitzung und der IP-Sitzung; und
einen zweiten verteilten EPC (220-3), aufweisend:
ein zweites SGW (220-3), ausgelegt zur Kopplung an einen zweiten Funkknoten (204-12) und ausgelegt zum Leiten der Benutzerdaten zu und von dem zweiten Funkknoten,
ein zweites PGW (232-3), ausgelegt zur Kopplung zwischen dem zweiten SGW und dem Netzwerk und ausgelegt zum Leiten der Benutzerdaten zwischen dem zweiten SGW und dem Netzwerk, und
eine zweite MME (226-3),
wobei, wenn die UE daraus, von dem ersten Funkknoten bedient zu werden, dazu übergeht, durch den zweiten Funkknoten bedient zu werden, die erste MME dafür ausgelegt ist,
das erste PGW anzuweisen, Verbindungsressourcen für die Benutzersitzung freizugeben und IP-Ressourcen für die IP-Sitzung zu halten, und
den HSS über das Freigeben der Verbindungsressourcen und das Halten der IP-Ressourcen zu informieren; und
wobei, wenn die UE Konnektivität mit dem zweiten Funkknoten initiiert, die MME ausgelegt ist zum
Empfangen einer Neu-Authentifizierung der UE von dem HSS, und
Koordinieren mit dem HSS und der ersten MME zum Einrichten eines Tunnels zwischen dem ersten PGW und dem zweiten PGW entsprechend den IP-Ressourcen, über den die Benutzerdaten von der UE zu dem zweiten PGW, zu dem ersten PGW und zu dem Netzwerk geleitet werden können.

2. EPC nach Anspruch 1, wobei die zweite MME ferner ausgelegt ist zum Einrichten neuer IP-Sitzungen für die UE, wobei das zweite PGW direkt zu dem Netzwerk geleitet wird.

3. EPC nach Anspruch 1 oder 2, wobei der zentrale EPC ferner ein Teilnehmerbereitstellungs-Repository umfasst, ausgelegt zum Speichern von Teilnehmerinformation für die UE.

4. EPC nach einem der Ansprüche 1-3, wobei der erste verteilte EPC ferner eine Richtlinien- und Gebührenregelfunktion umfasst, die mit der ersten MME und dem ersten PGW gekoppelt und ausgelegt ist zum Bereitstellen von dynamischen Dienstgüte-, QoS-, -Richtlinien für das erste PGW.

5. EPC nach einem der Ansprüche 1-4, wobei die zweite MME ferner ausgelegt ist zum Empfangen einer Adresse für das erste PGW, wenn die UE Konnektivität mit dem zweiten Funkknoten initiiert.

6. EPC nach einem der Ansprüche 1-5, wobei die zweite MME ferner ausgelegt ist zum Empfangen einer Anforderung von der UE zum Freigeben der Verbindungsressourcen; und
Weiterleiten der Anforderung zu der ersten MME

7. EPC nach einem der Ansprüche 1-6, wobei der erste verteilte EPC ferner einen Server umfasst, auf dem die erste MME als eine virtuelle Funktion implementiert ist.

8. EPC nach einem der Ansprüche 1-7, wobei der HSS ferner ausgelegt ist zum Speichern der IP-Ressourcen für die UE in einer Positionsdatenbank.

9. EPC nach einem der Ansprüche 1-8, wobei das erste SGW, das erste PGW und die erste MME als virtuelle Funktionen an mindestens einem Verarbeitungssystem implementiert sind.

10. Verfahren, durchgeführt durch einen entwickelten Paketkern, EPC, umfassend einen zentralisierten EPC, einen ersten verteilten EPC und einen zweiten verteilten EPC, wobei das Verfahren zum Warten einer Teilnehmereinrichtung, UE, umfasst:
Speichern von Authentifizierungsinformation durch einen Heimteilnehmerserver, HSS, in dem zentralisierten EPC;
Authentifizieren und Identifizieren der UE durch den HSS;
Verankern einer Benutzersitzung für die UE in dem ersten verteilten EPC durch ein erstes bedienendes Gateway, SGW, wobei das erste SGW an einen ersten Funkknoten gekoppelt ist;
Leiten von Benutzerdaten zu und von der UE über den ersten Funkknoten durch das erste SGW;
Verankern einer Internetprotokoll-, IP-, -Sitzung für die UE durch ein erstes Paketdatennetzwerk-Gateway, PGW, in dem ersten verteilten EPC, wobei das erste PGW zwischen dem ersten SGW und einem Netzwerk gekoppelt ist;
Leiten der Benutzerdaten zwischen dem ersten SGW und dem Netzwerk durch das erste PGW;
Empfangen einer Authentifizierung der UE von dem HSS durch eine erste Mobilitätsverwaltungsentität, MME, in dem ersten verteilten EPC;
Koordinieren des Erstellens der Benutzersitzung und der IP-Sitzung durch die erste MME;
Leiten der Benutzerdaten zu und von einem zweiten Funkknoten durch ein zweites SGW in dem zweiten verteilten EPC, wobei das zweite SGW an den zweiten Funkknoten gekoppelt ist;
Leiten der Benutzerdaten zwischen dem zweiten SGW und dem Netzwerk durch ein zweites PGW in dem zweiten verteilten EPC, wobei das zweite PGW zwischen dem zweiten SGW und dem Netzwerk gekoppelt ist;
wenn die UE davon, durch den ersten Funkknoten bedient zu werden, dazu übergeht, durch den zweiten Funkknoten bedient zu werden:
Anweisen des ersten PGW durch die erste MME, Verbindungsressourcen für die Benutzersitzung freizugeben und IP-Ressourcen für die IP-Sitzung zu halten;
Informieren des HSS durch die erste MME über das Freigeben der Verbindungsressourcen und das Verhalten der IP-Ressourcen; und
wenn die UE Konnektivität mit dem zweiten Funkknoten initiiert,
Empfangen einer Neu-Authentifizierung der UE von dem HSS durch eine zweite MME in dem zweiten verteilten EPC;
Koordinieren, durch die zweite MME, mit dem HSS und der ersten MME zum Einrichten eines Tunnels zwischen dem ersten PGW und dem zweiten PGW entsprechend den IP-Ressourcen, über den die Benutzerdaten von der UE zu dem zweiten PGW, zu dem ersten PGW und zu dem Netzwerk geleitet werden können.

11. Verfahren nach Anspruch 10, ferner umfassend:
Einrichten neuer IP-Sitzungen für die UE durch die zweite MME, wobei das zweite PGW direkt zu dem Netzwerk geleitet wird.

12. Verfahren nach den Ansprüchen 10 oder 11, ferner umfassend:
Empfangen einer Adresse für das erste PGW durch die zweite MME, wenn die UE Konnektivität mit dem zweiten Funkknoten initiiert.

13. Verfahren nach einem der Ansprüche 10-12, ferner umfassend:
Empfangen einer Anforderung von der UE durch die zweite MME zum Freigeben der Verbindungsressourcen und Weiterleiten der Anforderung zu der ersten MME

14. Verfahren nach einem der Ansprüche 10-13, ferner umfassend:
Speichern der IP-Ressourcen für die UE durch den HSS in einer Positionsdatenbank.

15. Verfahren nach einem der Ansprüche 10-14, wobei das erste SGW, das erste PGW und die erste MME als virtuelle Funktionen an mindestens einem Verarbeitungssystem implementiert sind.

## Revendications

1. Noyau de paquet évolué, EPC, pour desservir un équipement utilisateur, UE, comprenant :
un EPC centralisé (210) ayant un serveur d'abonné résidentiel, HSS (214), configuré de façon à stocker des informations d'authentification et à authentifier et identifier l'UE ;
un premier EPC distribué (220-1) ayant :
une première passerelle de desserte, SWG (230-1), configurée de façon à être couplée à un premier nœud radio (204-2) et configurée de façon à ancrer une session utilisateur pour l'UE et à acheminer des données utilisateur jusqu'à et depuis l'UE par l'intermédiaire du premier nœud radio,
une première passerelle de réseau de données par paquets, PGW (232-1), configurée de façon à être couplée entre entre la première SWG et un réseau et configurée de façon à ancrer une session Internet Protocol, IP, pour l'UE et à acheminer les données utilisateur entre la première SGW et le réseau, et
une première entité de gestion de mobilité, MME (226-1), configurée de façon à recevoir une authentification de l'UE à partir du HSS et à coordonner l'établissement de la session utilisateur et de la session IP ; et
un deuxième EPC distribué (220-3) ayant :
une deuxième SGW (230-3) configurée de façon à être couplée à un deuxième nœud radio (204-12) et configurée de façon à acheminer les données utilisateur jusqu'au et depuis le deuxième nœud radio,
une deuxième PGW (232-3) configurée de façon à être couplée entre la deuxième SGW et le réseau et configurée de façon à acheminer les données utilisateur entre la deuxième SGW et le réseau, et une deuxième MME (226-3) ;
dans lequel, lorsque l'UE passe d'être desservi par le premier nœud radio à être desservi par le deuxième nœud radio, la première MME est configurée de façon à :
demander à la première PGW de libérer les ressources de connexion pour la session utilisateur et de maintenir les ressources IP pour la session IP, et
informer le HSS de la libération des ressources de connexion et du maintien des ressources IP ; et
dans lequel, lorsque l'UE lance la connectivité avec le deuxième nœud radio, la deuxième MME est configurée de façon à :
recevoir une ré-authentification de l'UE depuis le HSS, et à
coordonner avec le HSS et la première MME pour établir un tunnel entre la première PGW et la deuxième PGW en fonction des ressources IP et à travers lequel les données utilisateur peuvent être acheminées de l'UE à la deuxième PGW, à la première PGW et au réseau.

2. EPC selon la revendication 1, dans lequel la deuxième MME est configurée en outre de façon à établir de nouvelles sessions IP pour l'UE avec la deuxième PGW acheminée directement au réseau.

3. EPC selon la revendication 1 ou 2, l'EPC central comprenant en outre un répertoire de fourniture d'abonné configuré de façon à stocker les informations de l'abonné pour l'UE.

4. EPC selon l'une quelconque des revendications 1 à 3, le premier EPC distribué comprenant en outre une fonction de politique et de règles de tarification couplée à la première MME et à la première PGW et configurée de façon à fournir des politiques de qualité dynamique de service, QoS, pour la première PGW.

5. EPC selon l'une quelconque des revendications 1 à 4, dans lequel la deuxième MME est configurée en outre de façon à recevoir une adresse pour la première PGW lorsque l'UE lance la connectivité avec le deuxième nœud radio.

6. EPC selon l'une quelconque des revendications 1 à 5, dans lequel la deuxième MME est configurée en outre de façon à :
recevoir une demande de l'UE de libérer les ressources de connexion ; et de
réacheminer la demande à la première MME.

7. EPC selon l'une quelconque des revendications 1 à 6, le premier EPC distribué comprenant en outre un serveur sur lequel la première MME est mise en œuvre comme une fonction virtuelle.

8. EPC selon l'une quelconque des revendications 1 à 7, dans lequel le HSS est configuré en outre de façon à stocker les ressources IP pour l'UE dans une base de données de localisation.

9. EPC selon l'une quelconque des revendications 1 à 8, dans lequel la première SGW, la première PGW et la première MME sont mises en œuvre comme des fonctions virtuelles sur au moins un système de traitement.

10. Procédé exécuté par un noyau de paquet évolué, EPC, comprenant un EPC centralisé, un premier EPC distribué et un deuxième EPC distribué, le procédé pour desservir un équipement utilisateur, UE, comprenant :
le stockage, par un serveur d'abonné résidentiel, HSS, dans l'EPC centralisé, d'informations d'authentification ;
l'authentification et l'identification, par le HSS, de l'UE ;
l'ancrage, par une première passerelle de desserte, SGW, dans le premier EPC distribué, d'une session utilisateur pour l'UE, la première SGW étant couplée à un premier nœud radio ;
l'acheminement, par la première SGW, de données utilisateur jusqu'à et depuis l'UE par l'intermédiaire du premier nœud radio ;
l'ancrage, par une première passerelle de réseau de données par paquets, PGW, dans le premier EPC distribué, d'une session Internet Protocol, IP, pour l'UE, la première PGW étant couplée entre la première SGW et un réseau ;
l'acheminement, par la première PGW, des données utilisateur entre la première SGW et le réseau ;
la réception, par une première entité de gestion de mobilité, MME, dans le premier EPC distribué, d'une authentification de l'UE depuis le HSS ;
la coordination, par la première MME, de l'établissement de la session utilisateur et de la session IP ;
l'acheminement, par une deuxième SGW dans le deuxième EPC distribué, des données utilisateur jusqu'à et depuis un deuxième nœud radio, la deuxième SGW étant couplée au deuxième nœud radio ;
l'acheminement, par une deuxième PGW dans le deuxième EPC distribué, des données utilisateur entre la deuxième SGW et le réseau, la deuxième PGW étant couplée entre le deuxième SGW et le réseau ;
lorsque l'UE passe d'être desservi par le premier nœud radio à être desservi par le deuxième nœud radio,
la demande, par la première MME, à la première PGW de libérer les ressources de connexion pour la session utilisateur et de maintenir les ressources IP pour la session IP;
la notification, par la première MME, au HSS de la libération des ressources de connexion et du maintien des ressources IP ; et
lorsque l'UE lance la connectivité avec le deuxième nœud radio,
la réception, par une deuxième MME dans le deuxième EPC distribué, d'une ré-authentification de l'UE depuis le HSS ;
la coordination, par la deuxième MME, avec le HSS et la première MME pour établir un tunnel entre la première PGW et la deuxième PGW en fonction des ressources IP et à travers lequel les données utilisateur peuvent être acheminées de l'UE à la deuxième PGW, à la première PGW et au réseau.

11. Procédé selon la revendication 10, comprenant en outre :
l'établissement, par la deuxième MME, de nouvelles sessions IP pour l'UE avec la deuxième PGW acheminée directement au réseau.

12. Procédé selon la revendication 10 ou 11, comprenant en outre :
la réception, par la deuxième MME, d'une adresse pour la première PGW lorsque l'UE lance la connectivité avec le deuxième nœud radio.

13. Procédé selon l'une quelconque des revendications 10 à 12, comprenant en outre :
la réception, par la deuxième MME, d'une demande de l'UE de libérer les ressources de connexion et de réacheminer la demande à la première MME.

14. Procédé selon l'une quelconque des revendications 10 à 13, comprenant en outre :
le stockage, par le HSS, des ressources IP pour l'UE dans une base de données de localisation.

15. Procédé selon l'une quelconque des revendications 10 à 14, dans lequel la première SGW, la première PGW et la première MME sont mises en œuvre comme des fonctions virtuelles sur au moins un système de traitement.
